(19)

**Europäisches Patentamt**
**European Patent Office**
**Office européen des brevets**

(11) **EP 4 299 504 A1**

(12) **EUROPEAN PATENT APPLICATION**
published in accordance with Art. 153(4) EPC

(43) Date of publication:
**03.01.2024 Bulletin 2024/01**

(21) Application number: **22759487.6**

(22) Date of filing: **17.02.2022**

(51) International Patent Classification (IPC):
**B81B 1/00** (2006.01)     **G01N 37/00** (2006.01)
**G01N 35/02** (2006.01)     **B01J 19/00** (2006.01)

(52) Cooperative Patent Classification (CPC):
**B01J 19/00; B81B 1/00; G01N 35/02; G01N 35/08; G01N 37/00**

(86) International application number:
**PCT/JP2022/006446**

(87) International publication number:
**WO 2022/181449 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2021   JP 2021028796**

(71) Applicant: **CANON KABUSHIKI KAISHA**
**Tokyo 146-8501 (JP)**

(72) Inventors:
• **FUKATSU Makoto**
  **Tokyo 146-8501 (JP)**
• **TANAKA Masanori**
  **Tokyo 146-8501 (JP)**

• **YAMAMOTO Takeshi**
  **Tokyo 146-8501 (JP)**
• **MIYAZAKI Keiji**
  **Tokyo 146-8501 (JP)**
• **MIURA Jun**
  **Tokyo 146-8501 (JP)**
• **MAEDA Harunobu**
  **Tokyo 146-8501 (JP)**
• **ENOKIDO Fuka**
  **Tokyo 146-8501 (JP)**
• **MATSUKAWA Akihisa**
  **Tokyo 146-8501 (JP)**
• **TERUI Yuhei**
  **Tokyo 146-8501 (JP)**

(74) Representative: **TBK**
**Bavariaring 4-6**
**80336 München (DE)**

(54) **MICROFLUIDIC CHANNEL DEVICE AND MANUFACTURING METHOD THEREFOR**

(57)     In the configuration of the present invention, since more of the colorant exist on the surface side of the porous substrate in the channel wall, the visibility of the channel is increased, and in addition, since the amount of the colorant in the internal portion of the channel wall is small, the elution of the ions contained in the colorant into the specimen is suppressed, and the measurement accuracy is increased. The present invention provides a microchannel device that has a channel sandwiched between channel walls formed in an inside of a porous substrate, wherein the channel wall contains a thermoplastic resin and a colorant, and wherein an abundance ratio of the colorant is higher in the porous substrate surface area of the channel wall than in an internal area of the channel wall.

**EP 4 299 504 A1**

# FIG. 1

**Description**

[Technical Field]

The present disclosure relates to a micro channel device that has a micro channel formed in a porous substrate and a method of manufacturing thereof.

[Background Art]

In recent years, the development of a microchannel device that can efficiently (in trace amount, quickly and simply) perform an analysis in biochemistry in one chip, with the use of a fine channel of a micro size, has been attracting attention in a wide range of fields. The examples of such fields include biochemical research, medical care, drug discovery, health care, environment and foods. Among the microchannel devices, a paper micro-analysis chip based on paper has advantages of light weight and low cost compared with conventional devices, has no need of using a power source, and further, also has high disposability. For this reason, the paper micro-analysis chip is expected to serve as an inspection device for medical activities in developing countries and remote areas where medical facilities are not well arranged and in disaster sites, and for airports and the like where the spread of infectious diseases must be stopped at the water's edge. In addition, the paper micro-analysis chip is attracting attention also as a health care device that can manage and monitor one's own health condition, because of being inexpensive and easy to handle.

In the early 1990s, a micro-analysis chip was developed that had a fine channel of a micro size formed on glass or silicon with the use of a photolithography method, a mold or the like, and carried out pretreatment, stirring, mixing, reaction and detection of a sample, on one chip. As a result, the micro-analysis chip realized miniaturization of the inspection system, quick analysis, and the reduction of a specimen, a reagent and a waste liquid. However, though the micro channel produced with the use of these photolithography technologies has high accuracy, the production cost thereof becomes high, and because of being difficult to incinerate, the disposability thereof becomes low. In addition, when an inspection liquid is sent into the micro channel, an auxiliary apparatus such as a syringe pump is necessary; accordingly, its use has been limited to an environment in which facilities are arranged; and it been mainly used in research institutions of biochemical systems.

Against these problems, the paper micro-analysis chip uses an inexpensive material such as paper or cloth as a substrate, also can drive a specimen or the inspection liquid by utilizing a capillary phenomenon of the material itself, and can be used at low cost and in a non-electric environment. In addition, transportation (distribution) is easy, and the disposability is high (disposal is completed only by burning). Furthermore, the apparatus does not need maintenance, and accordingly, it becomes possible to easily realize diagnosis by POC (point of care) at a low cost, by anyone (even an elderly person or a child having no knowledge), and in any place (regardless of a place including a place where there is no power source). Therefore, research and development of paper microchannel device for various infectious diseases, specific diseases, and health care (chronic disease management, health management) are currently being carried out by research institutions in the world.

Since liquid is used as a specimen or test solution for a microchannel device and liquid is dispensed at specified locations of the microchannel device, it is important to improve the visibility of the channel device in order to advance the diagnosis by POC more accurately.

For this purpose, the channel wall forming material may have a colorant to color the channel wall of the microchannel device.

In PTL 1 a microchannel device in which a channel wall is formed on a porous layer (paper, etc.) using a thermal transfer printer is proposed. As the channel wall forming material layer, the microchannel device has a thermoplastic material that penetrate into the porous member, and colorant is added to provide the function of identifying the channel wall in the porous layer as the other component selected as appropriate when necessary. The channel wall forming material layer is thermally pressure-bonded to the porous layer and fills the voids of the porous layer with the molten channel wall forming material to form the channel wall.

However, in PTL 1, the channel wall forming material is melted by thermal transfer method and then thermally pressure-bonded to fill the voids in the porous layer, so there may be a lot of colorant in the internal portion the channel wall in the porous layer. Therefore, the colorant component and the specimen to be dispensed may come into contact at the part of the channel wall that comes in contact with the channel in the porous layer, and the properties of the specimen itself may change due to the elution of ions remaining in the colorant or the adsorption of ions to the colorant. As a result, the inspection accuracy may decrease.

Based on these findings, a microchannel device that can ensure the visibility of the channel even with a small amount of colorant, reduce the property change of the specimen flowing in the channel, and suppress the deterioration of inspection accuracy is proposed.

[Citation List]

[Patent Literature]

PTL 1: Japanese Patent Application Laid-Open No.2015-131257

[Summary of Invention]

[Technical Problem]

The object of the present invention is to provide a microchannel device capable of accurately dispensing a specimen at a specified position by ensuring the visibility of a channel, and suppressing the deterioration of inspection accuracy by reducing the influence of substances contained in the channel wall in a porous layer on the specimen.

[Solution to Problem]

According to one aspect of the present invention, a microchannel device that has a channel sandwiched between channel walls formed in an inside of a porous substrate, wherein the channel wall contains a thermoplastic resin and a colorant, and wherein an abundance ratio of the colorant is higher in the porous substrate surface area of the channel wall than in an internal portion of the channel wall is provided.

[Advantageous Effects of Invention]

According to the present invention, it is possible to provide a microchannel device with high inspection accuracy with good visibility of the channel wall and little change in the properties of the specimen flowing in the channel.

[Brief Description of Drawings]

[FIG. 1]

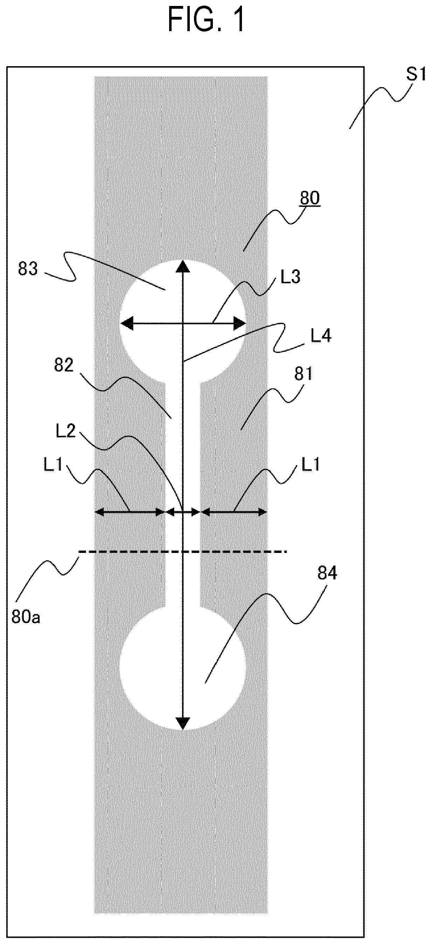

FIG. 1 is a channel pattern diagram of a microchannel device formed by penetrating channel wall forming materialT1 into the porous substrate S1 in Example 1.
[FIG. 2]

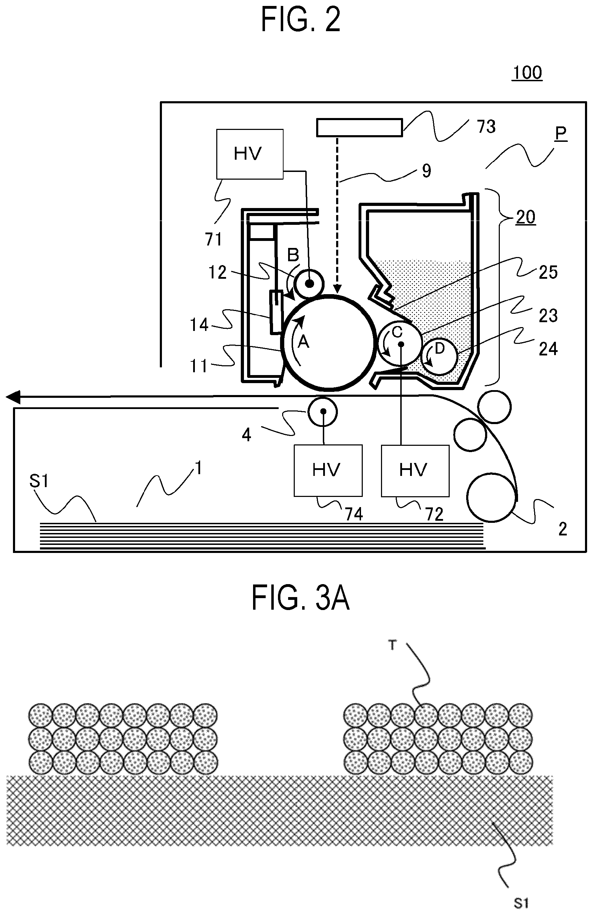

FIG. 2 is a structural diagram of a channel pattern image forming unit 100 in Example 1.
[FIG. 3A]
FIG. 3A shows a cross-sectional schematic diagram of a microchannel device formed by penetrating the channel wall forming materialT1 into the porous substrate S1 in Example 1. The state in which particles T containing channel wall forming material are placed on the surface of S1 is shown.
[FIG. 3B]

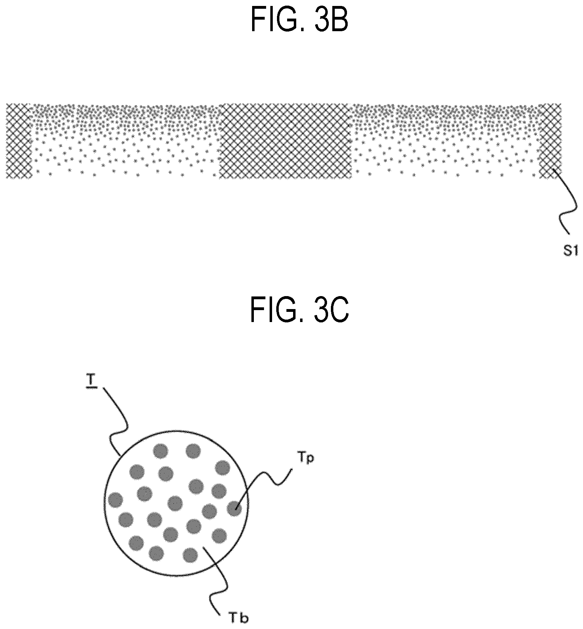

FIG. 3B shows a cross-sectional schematic diagram of a microchannel device formed by penetrating the channel wall forming material T1 into the porous substrate S1 in Example 1. The state in which the particles T shown in FIG. 3A are heated and the resin in the particles T are melted and penetrated into the porous substrate S1.
[FIG. 3C]
FIG. 3C is an enlarged schematic diagram showing the cross section of the particle T before heating.

[Description of Embodiments]

Embodiments of the present invention will be described below with reference to the drawings. The following embodiments are examples, and the present invention is not limited to the contents of the embodiments. In the following figures, components that are not necessary for the description of the embodiment are omitted from the figures.
A channel sandwiched by channel walls in a porous substrate is formed in the microchannel device of the present invention.
In addition, the channel wall contains a thermoplastic resin and a colorant, and the abundance ratio of the colorant is higher in the porous substrate surface area in the channel wall than in the internal portion of the channel wall.
Since more of the colorant exist on the surface side of the porous substrate in the channel wall, the visibility of the channel is increased, and in addition, since the amount of the colorant in the internal portion of the channel wall is small, the elution of the ions contained in the colorant into the specimen is suppressed, and the measurement accuracy is increased.

"An abundance ratio of the colorant" means a ratio of an area occupied by a colorant in a channel wall portion in a cross-sectional view of a microchannel device.

"A porous substrate surface area in the channel wall" means a surface of the porous substrate in the area where the channel wall is formed. In addition, "a porous substrate surface area in the channel wall" means "an area within a depth D ($\mu$m) from a surface".

"An internal portion of the channel wall" means an inside of a channel wall that is not a surface of a porous substrate and does not face a channel. Preferably, "an internal portion of the channel wall" is a portion of a channel wall at least D $\mu$m away from the surface of the porous substrate or a surface facing the channel.

In addition, in the microchannel device, X and Y preferably satisfies a relationship X>Y, when an abundance ratio of the colorant in an area within a depth D ($\mu$m) from a surface of the microchannel device excluding the porous substrate in the channel wall is X(%) and an abundance ratio of the colorant in an area farther than the depth D ($\mu$m) from the surface of the microchannel device excluding the porous substrate in the channel wall is Y(%).

Here, the depth D is a depth ($\mu$m) represented by (A/2)/(1-B/100) when a fiber diameter of a fiber forming the porous substrate is A ($\mu$m) and a porosity of the porous substrate is B(%).

The difference in the distribution of colorant in the cross-section direction in the microchannel device occurs because the colorant become entangled and remain in the fibers of the porous substrate. The ease of entanglement in the fibers is related to the fiber diameter and the porosity: the larger the fiber diameter, the more portion that can be entangled are, and the smaller the porosity, the more likely the fiber is to become entangled, as the result the amount of colorant in the shallower parts increases. In addition, when the fiber is approximated as a cylinder, the colorant entangles in the upper part of the cylinder, so half of the fiber diameter was considered as a parameter in the depth region. Based on these, the above relationship between X and Y was defined.

The fiber diameter A of the porous substrate was obtained by averaging the fiber thickness on the surface of the porous substrate measured at five points using a microscope or the like.

It is preferable that the amount of the colorant contained in the channel wall is $1.0 \times 10^{-6}$ mass% or more and 0.4 mass% or less based on a total mass of the entire channel wall (excluding the porous substrate). The total mass of entire channel wall (excluding the porous substrate) means a total mass of components constituting the channel wall excluding the porous substrate.

When the mass of the colorant contained in the channel wall based on a total mass of the entire channel wall is 0.4 mass % or less, an elution of ions contained in the colorant into the specimen can be suppressed, a change in the properties of the specimen flowing in the channel is suppressed, or the measurement accuracy may be increased.

In order to achieve the above range of colorant content in the channel wall forming material, the content of colorant in the channel wall forming material shall be $1.0 \times 10^{-6}$ mass% or more and 0.4 mass% or less based on the channel wall forming material.

The ingredients contained in the channel wall forming material are described below.

<Resin>

It is the main component forming the channel wall. Usually, a resin is placed on the surface of the porous substrate to form a channel pattern, and the resin is melted by heat to penetrate into the porous substrate. Therefore, thermoplastic resin is used as the resin.

The thermoplastic resin is not particularly limited, and for example, the following known resins can be used. Polyester resin, vinyl resin, acrylic resin, styrene-acrylic resin, polyethylene, polypropylene, polyolefin, ethylene-vinyl acetate copolymer resin, ethylene-acrylic acid copolymer resin, and the like. Among the above resins, polyester resin or styrene-acrylic resin is preferable, and styrene-acrylic resin is more preferable.

<Colorant>

The colorant contained in the channel wall forming material is not particularly limited, and the following known pigments and dyes can be used. Considering the effect on the specimen, pigments are preferred.

Yellow dyes include the following: Solvent yellow 33, 56, 79, 82, 93, 112, 162, 163; Disperse yellow 42, 54, 64, 164, 201, 211, and the like.

Dyes for magenta include the following: C.I.Solvent Red 1, 3, 8, 23, 24, 25, 27, 30, 49, 52, 81, 82, 83, 84, 100, 109, 111, 121, 135, 168, 179, 207; C.I.Disperse Red 9, 22, 60,; C.I.Solvent Violet 8, 13, 14, 21, 27; C.I.Disperse Violet 1; C.I.Basic Red 1, 2, 9, 12, 13, 14, 15, 17, 18, 22, 23, 24, 27, 29, 32, 34, 35, 36, 37, 38, 39, 40; C.I.Basic Violet 1, 3, 7, 10, 14, 15, 21, 25, 26, 27, 28; C.I.Direct Red 1, 4; C.I.Acid Red 1; C.I.Mordant Red 30, and the like.

The following are examples of dyes for cyan.C.I.Solvent Blue 14, 35, 36, 59, 63, 94, 197; C.I.Direct Blue 1, 2; C.I.Acid Blue 9, 15; C.I.Basic Blue 3, 5; C.I.Mordant Blue 7; C.I.Direct Green 6; C.I.Basic Green 4, 6, and the like.

Yellow pigments include the following: Yellow iron oxide, Naples yellow, Naphthol yellow S, Hansa yellow G, Hansa yellow 10G, Benzidine yellow G, Benzidine yellow GR, Quinoline yellow lake, Permanent yellow NCG, condensed azo compounds such as tartrazine lake, isoindolinone compounds, anthraquinone compounds, azo metal complexes, methine compounds and allylamide compounds. These specifically include the following: C.I.Pigment Yellow 12, 13, 14, 15, 17, 62, 74, 83, 93, 94, 95, 109, 110, 111, 128, 129, 147, 155, 168, 180, and the like.

Magenta pigments include the following: condensed azo compounds such as Bengala, Permanent Red 4R, Lysol Red, Pyrazolone Red, Watching Red Calcium Salt, Lake Red C, Lake Red D, Brilliant Carmine 6B, Brilliant Carmine 3B, Eosin Lake, and Rhodamine Lake B, Alizarin Lake, diketopyrrolopyrrole compounds, anthraquinone compounds, quinacridone compounds, base dye lake compounds, naphthol compounds, benzimidazolone compounds, thioindigo compounds and perylene compounds. These specifically include the following: C.I.Pigment Red 2, 3, 5, 6, 7, 23, 48:2, 48:3, 48:4, 57:1, 81:1, 122, 144, 146, 166, 169, 177, 184, 185, 202, 206, 220, 221, 254, and the like.

Cyan pigments include the following: copper phthalocyanine compounds such as Alkaline blue lake, Victoria blue lake, Phthalocyanine blue, Metal-free phthalocyanine blue, Phthalocyanine blue partial chloride, Fast sky blue, and indanthrene blue BG and their derivatives, anthraquinone compounds, base dye lake compounds, and the like. These include the following: C.I.Pigment Blue 1, 7, 15, 15:1, 15:2, 15:3, 15:4, 60, 62, 66, and the like.

Examples of black pigments include carbon black and aniline black.

It is also possible to include a magnetic substance as a colorant.

Magnetic substances include the following:

iron oxide such as magnetite, hematite and ferrite,
metals such as iron, cobalt, and nickel or
alloys of metals such as iron, cobalt, nickel and the like and metals such as aluminum, copper, magnesium, tin, zinc, beryllium, calcium, manganese, selenium, titanium, tungsten, vanadium and the like, and mixtures thereof.

These colorants can be used alone or in combination and even in solid solution. The content of the colorant is more preferably $1.0 \times 10^{-6}$ to 0.4 parts by mass, based on 100.0 parts by mass of the binder resin or polymerizable monomer.

Preferably, the colorant has a low content of ionic components, which tends to affect measurement accuracy. In particular, chloride ions are often included in the colorant and diagnosis is sometimes made using the concentration of chloride ions, therefore it is preferable to use a colorant with a low content of chloride ions. Specifically, it is preferable to use a colorant in which the concentration of chloride ions in the dispersion in which 3.00 g of colorant is dispersed in 100 mL of water is 10.0 mmol/L or less. More preferably, it is 5.0 mmol/L or less, and still preferably, 1.1 mmol/L or less.

<Other Ingredients>

The channel wall forming material can contain a known charge control agent, wax, or the like, as appropriate, without any particular limitation, in order to properly perform the channel pattern image formation of the microchannel device or to adjust the surface, charging, adhesion, or the like of the channel wall of the microchannel device.

<Porous substrate>

Porous substrates exhibiting moderate porosity and hydrophilicity are suitable. Porous structures such as continuous foam and network (nanofiber, etc.) structures are good, and filter paper, plain paper, fine paper, watercolor paper, Kent paper, synthetic paper, synthetic resin porous film, fabrics, textile products, and the like. Among these, filter paper is preferable because it has high porosity and good hydrophilicity. In order to enhance visibility by a colorant, it is preferably light colored, and white filter paper is especially preferable.

The porosity can be selected as appropriate according to the purpose, but 20%-90% is preferred. If the porosity exceeds 90%, the strength as the base material may not be maintained, and if it is less than 20%, the permeability of the sample solution may deteriorate.

The porosity (%) is the value calculated as follow:

$$\text{Porosity (\%)} = (\text{True density} - \text{Apparent density})/\text{True density} \times 100.$$

In addition, the apparent density (g/cm$^3$) was calculated as follow:

$$\text{Apparent density (g/cm}^3) = \text{basis weight (g/m}^2)/\text{thickness (mm)} \times 1000.$$

Hydrophilicity is a property required to allow biological fluids, including water, as a sample solution such as blood, urine and saliva, to diffuse into the substrate. The average thickness of the porous substrate can be selected as appropriate according to the purpose, but 0.02 mm-0.3 mm is often used. If the average thickness is less than 0.02 mm, the strength of the substrate may not be maintained, also, the ratio of the internal portion of the channel wall to the entire thickness increases, and it becomes difficult to obtain the effect. However, it is possible to obtain a similar effect even with a thin substrate by selecting a material with a small porosity or a small fiber diameter. Depending on the application, a thick porous substrate with a thickness of about 0.6 mm may be used.

Table 1 shows the basis weights of porous substrates S1 and S2 used in the examples.

[Table 1]

| Substrate | Basis weight (g/m²) | Thickness (mm) | Apparent density (g/cm³) | True density (g/cm³) | Porosity (%) |
|---|---|---|---|---|---|
| S1 | 55 | 0.08 | 0.69 | 1.5 | 54 |
| S2 | 87 | 0.17 | 0.51 | 1.5 | 66 |

<Channel>

A channel is an area of porous substrate sandwiched by channel walls (details will be described below). Liquid such as a specimen is blocked by the channel wall and confined in the channel, and flows through the channel by capillary action occurring in the porous substrate.

<Channel wall>

A channel wall is composed of a porous substrate and a channel wall forming material (containing at least thermoplastic resin and colorant) that fills the pore. The channel wall is formed on the porous substrate by forming a channel pattern using the channel wall forming material and then allowing the thermoplastic resin which forms the channel pattern to melt by a heating unit (not shown) described below and penetrate into the porous substrate.

<Channel wall formation>

In this embodiment, the channel pattern 80 shown in FIG. 1 was formed for porous substrates S1 and S2 using the channel pattern forming unit 100 shown in FIG. 2. To use as a microchannel device, an image 81 surrounding each of the reagent section 83, test solution section 84 and channel 82 was formed. The reagent section 83 is the area for attaching the reagent, the test solution section 84 is the area for attaching the test solution (sample solution), and the channel 82 is the area connecting the reagent section 83 and the test solution section 84. The image 81 sandwiching the channel 82 had a width L1 of 4 mm and the channel 82 had a width L2 of 1.5 mm. The diameter L3 of the test solution section 84 was 8 mm and the longest part L4 of the channel was 30 mm. As an example of use as a microchannel device is that by attaching a chemical showing a coloration reaction to the reagent section 83 and attaching a test solution to the test solution section 84, the test solution can be diffused through the channel 82 to the reagent section 83 and then whether a coloration reaction occurs can be tested. The amount of ions in the test solution can also be measured by attaching a commercially available ion-selective electrode to the reagent section 83. However, the shape and size of the channel pattern are not, of course, limited to this, and the shape may be a combination of straight lines, curves, or uses branching, and the width and cross-sectional area of the channel and channel wall may be changed accordingly in the middle of the channel.

In the example to be described later, as the channel pattern forming unit 100 in FIG. 2, an electrophotographic image forming apparatus was used, in this embodiment, to form a channel pattern on a porous substrate.

When an electrophotographic image forming device is used, a high-definition channel pattern can be freely formed on a porous substrate. Therefore, it is possible to fabricate a high-precision microchannel device with a desired channel pattern.

The following electrophotographic image forming apparatus can be used as the channel pattern forming unit 100. However, the method of channel pattern formation is not particularly limited to the following methods.

<Image forming unit (channel pattern forming unit)>

The image forming unit 100 accommodates a process cartridge P. The process cartridge P includes a photosensitive drum 11 as an image carrying member. A charging roller 12 for charging the surface of the photosensitive drum 11, a developing apparatus 20 for developing an electrostatic latent image formed on the surface of the photosensitive drum 11 by a developer (a channel wall forming particle) and a cleaning member 14 for cleaning a surface of the photosensitive drum 11 are provided around the photosensitive drum 11. A voltage necessary for forming the image can be applied by a charging high-voltage power source 71, a developing high-voltage power source 72, and a transfer high-voltage power source 74, and is controlled by a control unit (unillustrated).

When image formation begins, a voltage for image formation is applied to the charging roller 12, and the surface of the photosensitive drum 11is uniformly charged.

After the surface of the photosensitive drum 11 is charged by the charging roller 12, the surface of the photosensitive drum 11 is irradiated with laser light 9 from the exposure unit 73, and an electrostatic latent image is formed.

<Image forming process (channel pattern forming process)>

The developing roller 23 rotates in the direction of arrow C, and the supply roller 24 as a supply member of developer (particle T: particles of channel wall forming material) rotates in the direction of arrow D by driving of a motor M2 (not shown) connected to each of the rollers. When a developing voltage is applied to the developing roller 23, the developer is supplied by the developing roller 23 to develop the electrostatic latent image formed on the photosensitive drum 11. The ratio of the moving speed of the surface of the photosensitive drum 11 to the moving speed of the surface of the developing roller 23 at this time (moving speed of surface of developing roller 23/ moving speed of photosensitive drum 11) is called the developing peripheral speed ratio. By controlling this developing peripheral speed ratio, the amount of developer developed on the photosensitive drum 11 can be controlled. For example, if the developing peripheral speed ratio is 2.5, when all the developer on the developing roller 23 is used to develop the electrostatic latent image on the photosensitive drum 11, the amount of developer per unit area on the surface of the photosensitive drum 11 is 2.5 times the amount of developer per unit area on the surface of the developing roller 23. In the example described below, the developing peripheral speed ratio is controlled so that the amount of developer suitable for forming the microchannel wall in the porous substrates S1 and S2 can be developed. 25 denotes a developer regulating member.

The porous substrate is placed on the paper feed tray 1 and picked up one by one by the pickup roller 2. The developed developer image is transferred to the porous substrate by the potential difference with the transfer roller 4 applied by the transfer high-voltage power source 74.

The porous substrate onto which the developer image has been transferred is discharged to the outside of the image forming unit with keeping the developer image on the upper side in the gravity direction. The untransferred developer on the photosensitive drum 11 after passing through the transfer roller 4 is scraped off by an abutting cleaning member 14. A series of processes from the charging by the charging roller 12 are repeated to continuously form the image.

<Heating process>

The porous substrate onto which the channel pattern is transferred undergoes a heating process with a heating unit (not shown). Through the heating process, the thermoplastic resin contained in the channel wall forming material melts and penetrates into the porous substrate, forming a hydrophobic channel wall. At this time, a part of the colorant may penetrate accompanying with the penetration of the thermoplastic resin, but it is important that the concentration of the colorant on the surface side of the porous substrate is higher than the concentration of the colorant of the internal portion of the channel wall.

The heating temperature should be the temperature at which thermoplastic resin melts and penetrates into the porous substrate. In the example described below, the heating condition was set at 200 °C for 2 minutes. As the heating unit, an oven (blowing constant temperature oven DN610 H of Yamato Scientific Co., Ltd.) was used. However, the heating method is not limited to this, and a far infrared heater or a hot plate and the like may be used, and the heating conditions should be selected according to the physical properties of the particles T1 and porous substrate.

FIG. 3A is a cross-sectional schematic view at the position of dashed line 80a in FIG. 1, showing particles T containing channel wall forming material placed on the surface of porous substrate.

FIG. 3B shows the particles T shown in FIG. 3A being heated and the resin in the particles T being melted and penetrating into a porous substrate.

FIG. 3C is an enlarged schematic showing the cross section of the particle T before heating.

As shown in FIG. 3B, when heated to a predetermined temperature, the resins Tb in the channel wall forming material melt, but colorants Tp do not melt by heat. Therefore, when the resins Tb penetrate into the porous substrate, colorants Tp become entangled in the continuous foam of the porous substrate and the paper fibers forming the network structure, and thus tends to remain in the closer way to the device surface in the cross-sectional direction of the microchannel device. As a result, the abundance ratio of colorants contained in the channel wall in the cross-sectional direction of the microchannel device is higher on the surface side of the channel wall than in the internal portion of the channel wall, thus forming a microchannel device with a channel surrounded by such a resin wall.

[Examples]

The invention is described in detail below with examples and comparative examples, but the invention is not limited to these examples. "Part" and "%" in the text are mass standards unless otherwise noted.

<Example 1>

In this example, S 1 was used as a porous substrate. For the channel wall forming material in this example, particles T1 with a number average particle size of 6.5 micrometers, which was prepared by the following manufacturing method, was used.

<Production of particle T1>

[Preparation of Polymerizable Monomer Composition]

The following compositions were mixed and dispersed in a ball mill for 3 hours.

| | |
|---|---|
| • Styrene | 70.0 parts |
| • N- Butyl acrylate | 30.0 parts |
| • Divinylbenzene | 0.1 part |
| • PV Fast Blue BG | 0.4 part |
| • Polyester resin | 5.0 parts |

(Polycondensate of propylene oxide-modified bisphenol A and isophthalic acid (Glass transition temperature 65 degrees C, weight-average molecular weight (Mw) 10,000, number-average molecular weight (Mn)6000))

The resulting dispersion was transferred to a reactor equipped with a propeller stirring blade, heated to 60 °C while stirring at a speed of 300rpm, and then 3.0 parts 2,2 '-azobis (2,4-dimethylvaleronitrile) was added to dissolve and make a polymerizable monomer composition.

[Preparation of Aqueous Dispersion Media]

Ion-exchanged water 710 parts and 0.1 mol/L sodium phosphate aqueous solution 450 parts were added to a 2-L four-neck flask fitted with a high-speed stirring device T.K.Homomixer (manufactured by PRIMIX Corporation) and heated to 60°C while stirring at a speed of 12000rpm. To this, 68.0 parts of 1.0 mol/L calcium chloride aqueous solution was added and, an aqueous dispersion medium containing calcium phosphate (a poorly water-soluble dispersion stabilizer) was prepared.

[Granulation and Polymerization]

The polymerizable monomer composition was put into the above aqueous dispersion medium, the rotation speed was maintained at 12000rpm, 10 parts of t-butylperoxypivalate as a polymerization initiator was developed and granulated for 15 minutes. Then, the agitator was changed from the high-speed agitator to the propeller agitator blade, and the polymerization reaction was continued for 5 hours by maintaining the internal temperature at 60 °C, and then the internal temperature was raised and maintained at 80 °C to continue the polymerization reaction for another 3 hours. After the polymerization reaction was completed, the remaining monomer was distilled off at 80 °C under reduced pressure, and then cooled to 30 °C to obtain a polymer fine particle dispersion.

[Wash]

The above polymer fine particle dispersion was transferred to a container for washing, and while stirring, dilute hydrochloric acid was added to adjust the pH to 1.5. After stirring the dispersion for 2 hours, the polymer fine particles were obtained by solid-liquid separation with a filter. The obtained were put into 1200 parts of ion-exchanged water and stirred to make the dispersion again, followed by solid-liquid separation with a filter. This operation was performed 3 times to obtain parent particles of particles T1.

[Additive]

In addition, 1.0 parts of a fluidity enhancer (silica with a primary particle number average particle size of 7 nm) surface-treated with hexamethyldisilazane were dry-mixed for 5 minutes with a Henschel mixer to 100.0 parts of the obtained parent particles. Then, particles T1 for channel pattern image forming with a number average particle size D1 of 6.5 $\mu$m were obtained.

<Production of microchannel device>

The obtained particles T1 were used to produce a microchannel device using an electrophotographic imaging device under the conditions described above.

<Example 2>

In this example, the microchannel device was manufactured in the same manner as in Example 1 except that the amount of the colorant PV Fast Blue BG was changed to 3.0 parts.

<Example 3>

In this example, the microchannel device was manufactured in the same manner as in Example 1 except for the following changes.
The colorant was changed from PV Fast Blue BG to Toner Yellow 3GP (manufactured by Clariant corporation) and the usage was changed to 0.3 part.

<Example 4>

In this example, the microchannel device was manufactured in the same manner as in Example 1 except for the following changes.
The colorant was changed from PV Fast Blue BG to Irgalite Toner Yellow L 1257 (manufactured by BASF corporation), and the usage was changed to 0.2 part.

<Example 5>

In this example, the microchannel device was manufactured in the same manner as in Example 1 except for the following changes.
The colorant was changed from PV Fast Blue BG to Toner Magenta E (manufactured by Clariant corporation), and the usage was changed to 0.1 part.

<Example 6>

In this example, the microchannel device was manufactured in the same manner as in Example 1 except that the porous substrate was changed from S1 to S2.

<Comparative Example 1>

In this comparative example, a microchannel device was manufactured in the same manner as Example 1 except that the channel wall forming material did not contain any colorant.

<Evaluation of microchannel device>

[Evaluation of visibility confirmation: measurement of difference in reflectance]

In order to compare the visibility of the microchannel device made in the examples, the concentration of the channel wall was measured by the following method.
The reflectance D1(%) of the area where the channel wall is formed on the surface of a microchannel device, and the reflectance D2(%) of the area where the channel wall is not formed on the surface of the same device (only porous substrate) were measured at three points each using a white photometer TC-6DS/A made by Tokyo Denshoku Co. In addition, the measurements at each of the three points were used to calculate the arithmetic means D1 avg and D2 avg.

Then, using the value of (D2 avg-D1 avg), the visibility was judged based on the following criteria.

A: Very good (difference in reflectance is 2.0% or more)
B: Good (difference in reflectance is 1.0% or more and less than 2.0%)
C: Poor (difference in reflectance is less than 1.0%)

If the difference in reflectance is 1.0% or more, it was judged that the visibility is excellent because the boundary with and without channel wall can be visually confirmed.

<Evaluation of measurement accuracy: measurement of chloride ion concentration>

In order to confirm the effect of the microchannel device manufactured in the example on measurement accuracy, the change in chloride ion concentration was confirmed using a commercially available chloride ion electrode sensor.

Sodium chloride solution adjusted to 1.00 mmol/L 20 mL of a was dropped into the test solution section 84 of the channel shown in FIG. 1, and the flow 82 of the microchannel device was filled with the solution. Then, the measuring terminal of a calibrated chloride ion electrode (manufactured by Shimazu Rika Co., Ltd.: CI-6732) connected to a multi-chemical sensor (manufactured by Shimazu Rika Co., Ltd.: PS-2170) was pressed against the reagent section 83. Then, the reference potential E0(V) and the proportionality factor S(V/(mol/L)) obtained by the calibration and the voltage value (voltage after stabilization) E obtained by the measurement were substituted into equation 1 below to obtain the chloride ion concentration C (mmol/L).

$$C=10((E-E0)/S) \text{ (Equation 1)}$$

The difference between the measured chloride ion concentration and the concentration of the sample solution was calculated, and the measurement accuracy was judged based on the following criteria based on the calculated difference.

A: Very high (difference is less than 0.02 mmol/L)
B: High (difference is 0.02 mmol/L or more and less than 0.10 mmol/L)
C: Low (difference is 0.10 mmol/L or more)

If the difference was less than 0.10 mmol/L, the measurement accuracy was judged to be good.

Table 2 shows the measurement results of the abundance ratio of colorant, the difference in reflectance, and the concentration of chloride ions in each example and comparative example.

<Comparative experimental example 1>

For the measurement of chloride ion concentration, as a comparison, 100 mL of sodium chloride aqueous solution adjusted to 1.00 mmol/L above is placed in a beaker, and the result of the measurement by immersing the chloride ion electrode in the sample solution is shown as Comparative Experiment 1.

<Comparative experimental example 2>

To 100 mL of sodium chloride solution adjusted to 1.00 mmol/L above, 3.0 g of colorant PV Fast Blue BG used in Example 1 was mixed and stirred for 1 hour. Then, the solution was allowed to stand for 12 hours and the chloride ion concentration of the sample solution from which the supernatant was extracted was measured, and the results are shown as Comparative Experimental Example 2.

In addition, the chloride ion concentration when 3.0 g of colorant PV Fast Blue BG was dispersed in 100 mL of water was measured, and the chloride ion concentration was found to be 1.02 mmol/L.

<Measurement of abundance ratio of colorant>

To confirm the location of colorant in the channel wall, a portion of the channel wall portion of the manufactured microchannel device was cut off, immersed in a light-curable epoxy resin, and cured. From the cured product, flaky samples of 300 $\mu$m square and 70 $\mu$m thick were cut using an ultramicrotome equipped with a diamond knife. The samples were magnified by a factor of 10,000 using the scanning image mode of a scanning transmission electron microscope to obtain cross-sectional images of the channel wall of the microchannel device.

The identification of colorant in the cross-sectional images was carried out using an energy dispersive X-ray spectrometer (EDX)or the like.

As a result of observation, it was confirmed that in each microchannel device manufactured in the Examples, the abundance ratio of colorant in the surface area of the porous substrate in the channel wall was higher than the abundance ratio of colorant in the internal portion of the channel wall.

In porous substrate S1, the average of the fiber diameter was 18.3 microns and the porosity was 54%. Therefore, the depth D represented by (A/2)/(1-B/100) is 19.9 $\mu$m.

Regarding the microchannel device manufactured in Example 1, the abundance ratio X(%)of the colorant in the channel wall excluding the porous substrate in an area within a depth of 19.9$\mu$m from a surface of the microchannel device was 0.330%. In the area beyond 19.9 $\mu$m from the upper surface and beyond 19.9 $\mu$m from the bottom surface (in other words, an area between 19.9-62.1 $\mu$m from the surface), the abundance ratio Y(%) of the colorant in the channel wall excluding the porous substrate in the channel wall was 0.057%. That is, the microchannel device manufactured in Example 1 satisfied X>Y.

The X and Y values of the microchannel device manufactured in Examples 2-6 were measured in the same manner as the microchannel device manufactured in Example 1, and the results are shown in Table 2.

[Table 2]

| | | Example 1 | Example 2 | Example 3 | Example 4 | Example 5 |
|---|---|---|---|---|---|---|
| Porous substrate | | S1 | S1 | S1 | S1 | S1 |
| Fiber diameter | | 18.3 | 18.3 | 18.3 | 18.3 | 18.3 |
| Porosity | | 54 | 54 | 54 | 54 | 54 |
| Colorant | | PV Fast Blue BG | PV Fast Blue BG | Toner Yellow 3GP | Irgalite Toner Yellow L 1257 | Toner Magenta E |
| Content | | 0.4 (parts) | 3.0 (parts) | 0.3 (parts) | 0.2 (parts) | 0.1 (parts) |
| Thickness ($\mu$m) | | 82.0 | 82.0 | 83.0 | 81.0 | 82.0 |
| Measured area | Depth D ($\mu$m) | 19.9 | 19.9 | 19.9 | 19.9 | 19.9 |
| | Surface area of channel wall ($\mu$m) | Surface~ 199 | Surface~ 19.9 | Surface~ 199 | Surface~ 199 | Surface~ 199 |
| | Interior of channell wall ($\mu$m) | 19.9~ 62.1 | 19.9~ 62.1 | 19.9~ 63.1 | 19.9~ 61.1 | 19.9~ 62.1 |
| Abundance ratio of colorant (%) | Surface area of channel wall ($\mu$m) | 0.330 | 2.652 | 0.185 | 0.134 | 0.075 |
| | Interior of channell wall ($\mu$m) | 0.057 | 0.432 | 0.120 | 0.068 | 0.022 |
| Evaluation of confirmed visibility | Difference of reflectance (%) | 9.8 | 40.5 | 1.6 | 1.2 | 2.8 |
| | Rank | A | A | B | B | A |
| Evaluation of measurement accuracy | Concentration of chloride ion [mmol/L] | 1.013 | 1.098 | 1.012 | 1.021 | 1012 |
| | Difference | 0.013 | 0.098 | 0.012 | 0.021 | 0.012 |
| | Rank | A | B | A | B | A |

(continued)

| | | Example 6 | Com parativ e example 1 | Comparative experimental example 1 | Comparative experimental example 2 |
|---|---|---|---|---|---|
| Porous substrate | | S2 | S1 | | |
| Fiber diameter | | 16.9 | 18.3 | | |
| Porosity | | 66 | 54 | | |
| Colorant | | PV Fast Blue BG | | | PV Fast Blue BG |
| Content | | 0.4 (parts) | | | 3.0 (parts) |
| Thickness ($\mu$m) | | 171 | 81.0 | | |
| Measured area | Depth D ($\mu$m) | 24.9 | | | |
| | Surface area of channel wall ($\mu$m) | Surface~ 24.9 | | | |
| | Interior of channell wall ($\mu$m) | 24.9~ 146.1 | | | |
| Abundance ratio of colorant (%) | Surface area of channel wall ($\mu$m) | 0.310 | | | |
| | Interior of channell wall ($\mu$m) | 0.076 | | | |
| Evaluation of confirmed visibility | Difference of reflectance (%) | 8.8 | 0.6 | | |
| | Rank | A | C | | |
| Evaluation of measurement accuracy | Concentration of chloride ion [mmol/L] | 1.008 | 1.010 | 1.010 | 2.030 |
| | Difference | 0.008 | 0.010 | 0.010 | 1.030 |
| | Rank | A | A | | |

As described above, according to the present invention, a microchannel device can be realized in which a specimen can be accurately dispensed at a specified position because of its high reflection density and excellent visibility, and in which deterioration in inspection accuracy can be suppressed.

The present invention is not limited to the above embodiment and various modifications and variations are possible without departing from the spirit and scope of the present invention. Accordingly, the following claims are attached to publicize the scope of the present invention.

This application claims priority on the basis of Japanese Patent Application No. 2021-028796 filed on February 25, 2021, the entire contents of which are hereby incorporated herein.

[Reference Signs List]

    80 channel pattern
    81 channel wall forming material image (image)
    82 channel
    83 reagent section
    84 test solution section

100 channel pattern image forming unit

**Claims**

1. A microchannel device that has a channel sandwiched between channel walls formed in an inside of a porous substrate,

   wherein the channel wall contains a thermoplastic resin and a colorant, and
   wherein an abundance ratio of the colorant is higher in the porous substrate surface area of the channel wall than in an internal area of the channel wall.

2. The microchannel device according to claim 1,
   wherein an amount of the colorant contained in the channel wall is $1.0 \times 10^{-6}$ mass% or more and 0.4 mass% or less based on a total mass of components constituting the channel wall excluding the porous substrate.

3. A microchannel device that has a channel sandwiched between channel walls formed in an inside of a porous substrate,

   wherein the channel wall contains a thermoplastic resin and a colorant, and
   wherein X and Y satisfies a relationship of X>Y,
   when an abundance ratio of the colorant in an area within a depth D ($\mu$m) from a surface of the microchannel device excluding the porous substrate in the channel wall is X(%) and an abundance ratio of the colorant in an area beyond the depth D ($\mu$m) from the surface of the microchannel device excluding the porous substrate in the channel wall is Y(%), said depth D being a depth ($\mu$m) represented by (A/2)/(1-B/100) when a fiber diameter of a fiber forming the porous substrate is A ($\mu$m) and a porosity of the porous substrate is B(%).

4. A method of manufacturing a microchannel device that has a channel sandwiched between channel walls formed in an inside of a porous substrate, comprising;

   a step of placing a channel wall forming material comprising a thermoplastic resin and a colorant on a surface of the porous substrate by an electrophotographic manner to form a channel pattern on the surface of the porous substrate; and
   a step of melting the thermoplastic resin contained in the channel pattern by heat to allow the thermoplastic resin to penetrate into the porous substrate to form a channel in the porous substrate,
   wherein a content ratio of the colorant with respect to the channel wall forming material is $1.0 \times 10^{-6}$ mass % or more and 0.4 mass % or less.

# FIG. 1

# FIG. 2

# FIG. 3A

FIG. 3B

S1

FIG. 3C

T

Tp

Tb

## INTERNATIONAL SEARCH REPORT

| International application No. |
| --- |
| **PCT/JP2022/006446** |

**A.    CLASSIFICATION OF SUBJECT MATTER**

*B81B 1/00*(2006.01)i; *G01N 37/00*(2006.01)i; *G01N 35/02*(2006.01)i; *B01J 19/00*(2006.01)i
FI:    G01N35/02 A; G01N37/00 101; B01J19/00 321; B81B1/00

According to International Patent Classification (IPC) or to both national classification and IPC

**B.    FIELDS SEARCHED**

Minimum documentation searched (classification system followed by classification symbols)

B81B1/00; G01N37/00; G01N35/02; B01J19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2015-131257 A (RICOH CO LTD) 23 July 2015 (2015-07-23)<br>      paragraphs [0026]-[0049], [0075]-[0078], fig. 1-3 | 1-3 |
| Y | paragraphs [0026]-[0049], [0075]-[0078], fig. 1-3 | 4 |
| Y | US 2016/0207038 A1 (XEROX CORPORATION) 21 July 2016 (2016-07-21)<br>      paragraph [0028] | 4 |
| A | JP 2009-291758 A (SHARP CORP) 17 December 2009 (2009-12-17)<br>      entire text, all drawings | 1-4 |
| P, A | JP 2021-39095 A (CANON KK) 11 March 2021 (2021-03-11)<br>      entire text, all drawings | 1-4 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2" align="center">**INTERNATIONAL SEARCH REPORT**<br>Information on patent family members</td><td colspan="2">International application No.<br><br>**PCT/JP2022/006446**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>JP   2015-131257  A</td><td align="center">23 July 2015</td><td>US   2016/0008812  A1<br>paragraphs [0102]-[0153],<br>[0208]-[0221], fig. 1-3<br>WO   2014/133192  A1<br>CN   105008932  A</td><td></td></tr>
<tr><td>US   2016/0207038  A1</td><td align="center">21 July 2016</td><td>(Family: none)</td><td></td></tr>
<tr><td>JP   2009-291758  A</td><td align="center">17 December 2009</td><td>(Family: none)</td><td></td></tr>
<tr><td>JP   2021-39095  A</td><td align="center">11 March 2021</td><td>WO   2021/039728  A1</td><td></td></tr>
</table>

Form PCT/ISA/210 (patent family annex) (January 2015)

**EP 4 299 504 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015131257 A
- JP 2021028796 A